# EUROPEAN PATENT APPLICATION

(11) **EP 3 316 355 A1**
(43) Date of publication of application: **02.05.2018**
(21) Application number: 16195746.9
(22) Date of filing: 26.10.2016
(51) Int. Cl.: H01M 4/16, H01M 4/76, H01M 4/14, H01M 10/12

(54) **PROTECTION FOR AN ELECTRODE PLATE OF A LEAD ACID BATTERY, ELECTRODE PLATE, AND BATTERY EQUIPPED THEREOF**

(71) Applicant: HurraH S.à r.l., 8281 Kehlen (LU)
(72) Inventor: KERT, Stanislaus, 9068 Ettelbruck (LU); MARTINS DA COSTA, David, 8285 Kehlen (LU); CATTIAUX, Alain, 08200 Balan (FR)
(74) Representative: Gevers & Orès

(57) **Abstract**

The invention is related to a protection (1) for an electrode plate of a lead acid battery, said protection (1) comprising at least one sheet of fabric defining two faces (9a, 9b), an upper side (10a), an opposed lower side (10b) and two lateral sides (11 a, 11 b) extending between said upper and lower sides (10a, 10b), said lateral sides (11 a, 11 b) being ribless.

The invention is also related to a positive electrode plate comprising such protection (1) and to a lead acid battery comprising such positive electrode plate.

## Description

### Technical field

The present invention generally relates to a protection for an electrode plate of a lead acid battery, an electrode plate comprising such protection and a battery equipped thereof.

### Background Art

Lead acid batteries are widely used and include adjacent positive and negative electrode plates immersed in an electrolyte and spaced by separators. The latter are used to prevent short circuits occurring between the electrodes while enabling ionic transfer of charges (ion conductive but non electron conductive) and act as a reservoir for electrolyte.

The lead acid battery is charged and discharged alternatively. This operation requires the electro-chemical transformation of an active mass made of lead dioxide into lead sulphate on the positive electrode plates and lead into lead sulphate on the negative electrode plates while discharging. The reactions are reversed during charge. The active mass contracts or expands as the reactions occur. This phenomenon is sometimes called breathing.

The electrode plates can either be flat or tubular. Tubular electrodes comprise pencils made of current carrying spines surrounded by the active mass. Flat electrodes comprise a grid and active mass located in cells defined by the grid. In both cases, breathing could lead to active mass shedding and/or mossing which has a major impact on the life time of the battery. As a result, the electrodes are often protected to avoid such shedding and/or mossing phenomenon. The electrochemical reactions occurring between the electrodes and the electrolyte should however be preserved.

In tubular electrodes, the electrode protection takes the form of a cartridge-type belt gauntlet.

The cartridge-type belt gauntlet is obtained by the assembly of two sheets of a fabric. The two sheets are connecting to each other via separation lines parallel to each other in a way to form a plurality of small longitudinal tubes in which are introduced the current carrying spines. To achieve these tubes, the connection lines are regularly spaced by a distance chosen with respect to the electrodes diameter and the desired quantity of active mass to encase. The separation lines are preferably obtained by sewing sheets of fabric. A thermal process is then applied to give the final shape and rigidity to the longitudinal tubes.

During the manufacturing process of tubular electrodes, the material which is to constitute the active mass is introduced around the current carrying spines to fill the cartridge-type belt gauntlet and subjected to acid treatments and formation process. In other words, said cartridge-type belt gauntlet is used as a mould to give its shape to the active mass.

Conventionally, the cartridge-type belt gauntlet finishes along each of its lateral side with a final sewing forming a ribbed edge. The ribbed edge can be a small part of a double layer of fabric (lateral "T" finish) or a part of a tube (lateral "C" finish). The ribbed edge is believed useful to avoid side short circuits in the battery, mainly in the case of leaf type separators. To further ensure such result, the ribbed edge, and optionally a part of the last tube, can be coated with an insulation material, such as glue or hotmelt.

Such kind of lateral side represents a significant loss of fabric and it hinders the introduction of the cartridge-type belt gauntlet in the battery container.

In addition, to avoid the short circuit, it is mandatory to use separators. They can be leaf type separators (also referred as sheet type separators) intercalated between the electrode plates or sleeve type separators (2 sides closed) or pocket type separators (3 sides closed) in which the electrode plate is introduced.

The introduction of the positive electrode plates in the sleeve or pocket type separators is preferred compared to the introduction of the negative electrode plates because positive electrode plates are more prone to active mass loss (mossing/shedding). Besides, the number of negative electrode plates in a battery is generally higher than the number of positive electrode plates, and placing sleeve or pocket type separators around the negative electrode plates involves using more material and is a more costly. However, the insertion of the negative electrode plates in the sleeve or pocket type separators is facilitated compared to the introduction of the positive electrode plates because of the shape of the lateral side of cartridge-type belt gauntlet.

Moreover, for a given size of a battery container, the shape of the lateral side of the cartridge-type belts gauntlet also results in limiting the width size of the positive electrode plates thus the diameter and/or the number of the tubular electrodes formed into the cartridge-belts like gauntlet.

Furthermore, the manufacture of such a cartridge belt type of gauntlet requires a complex process using two sheets and a high number of separation lines.

### Technical problem

There is therefore a need of a cartridge-belt-type gauntlet that remedies the above drawbacks.

### General description of the Invention

In order to reach the above-mentioned goals, the present invention proposes a protection for an electrode plate of a lead acid battery. Said protection comprises at least one sheet of fabric defining two faces, an upper side, an opposed lower side and two lateral sides extending between said upper and lower sides. Said lateral sides are ribless.

For the gauntlet manufacturer, such protection eliminates a significant waste of fabric at the two lateral edges of the protection.

Unlike classic protection that ends on each lateral sides by a ribbed edge (in the form of a small part of a double layer of fabric or a part of a tube), this protection is of regular shape and does not include any obstacle on its two lateral sides. As a consequence, it can be more easily introduced in a battery container and/or in a sleeve or pocket type separator. Besides, the absence of obstacle on the two lateral sides of the protection limits the risk of damage of the separator by friction of the sharp ribbed edge against it.

Moreover, the proposed protection enables a space saving which in turn gives the opportunity to obtain larger positive electrode plates (more tubular electrodes and/or larger tubular electrode diameter) and a more powerful battery for a given size of the battery container.

Alternatively, this space saving is a security margin for the battery manufacturer to obtain positive electrode plates that will fit in the battery container. Indeed, during the introduction of the active mass in the longitudinal tubes of the protection and the formation of the battery, the diameter of the tubes increases. A poor control of the increase of the diameter can led to the manufacture of unusable positive electrode plates difficult to recycle and a cost loss. This space saving on each sides of the protection thus can limit the risk of obtaining inadequate/non-fittingpositive electrode plates.

According to different aspects of the invention which can be taken alone or in combination:
- said two faces are made of an single sheet of fabric,
- said single sheet of fabric comprises two lateral edges,
- said lateral edges are joined by at least one connection line,
- said two lateral edges are superimposed,
- said two lateral edges are abutted,
- a width of said protection is defined between said lateral sides,
- said connection line is located between the first and the last eighth of the width of the protection,
- said connection line is located between the first and the last quarter of the width of the protection,
- said connection line is located within the first half of the width of the protection,
- said protection is a cartridge-type belt gauntlet comprising longitudinal tubes,
- said cartridge-type belt gauntlet comprises separation lines parallel to each other,
- said separation lines join said two faces,
- said separation lines form said longitudinal tubes,
- said connection line and one of said separation lines are merged,
- said connection line is a sewing line, a welding line and/or a glue line,
- said separation lines are sewing lines, welding lines and/or a glue lines,
- said protection comprises an insulation material along said lateral sides,
- said insulation material is glue or hotmelt,
- a part of the last tubes is coated with said insulation material,
- said fabric material is a non-woven, woven and/or knitted fabric.

The present invention also concerns a positive electrode plate comprising a protection as described above.

According to different aspects of the invention which can be taken alone or in combination:
- the positive electrode plates comprise current carrying spines and active mass surrounding said spines,
- said active mass is contained in and by said protection,
- said active mass is contained in and by said longitudinal tubes.

The present invention concerns as well a lead acid battery comprising positive electrode plates as described above.

According to different aspects of the invention which can be taken alone or in combination:
- the lead acid battery comprises further negative electrode plates,
- the lead acid battery comprises further separators,
- said separators are placed between said negative and positive electrode plates,
- said separators are sleeve or pocket or leaf type separators,
- said positive electrode plates are placed in said sleeve or pocket type separators.

### Brief description of drawings

The invention will be better understood and other objects, details, features and advantages thereof will become more clearly apparent in the following detailed explanatory description of at least one embodiment given as an illustrative and nonlimiting example with reference to the attached drawings, in which:
Fig. 1 is a front view showing a protection for a positive electrode plate of a lead acid battery according to the invention,
Fig. 2 is a partial top view of the protection of fig. 1 according to a first embodiment,
Fig. 3 is an enlargement of figure 2 showing a connection line,
Fig. 4 is a partial top view of the protection of fig. 1 according to a second embodiment,
Fig. 5 is a partial top view of a lead acid battery comprising the protection of fig. 1.

### Detailed description

The invention is related to a protection 1 for an electrode plate, especially a positive electrode plate, of a lead acid battery.

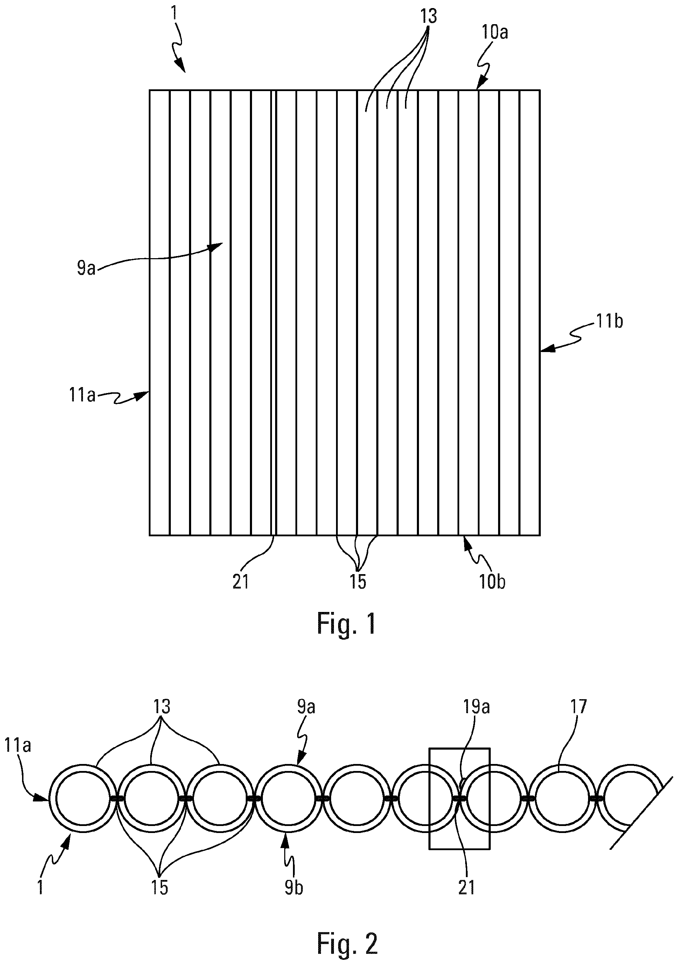

As illustrated in figure 1 and 2, said protection 1 comprises two faces 9a, 9b, an upper side 10a, a lower side 10b and two lateral sides 11 a, 11 b.

In this case, the protection is a cartridge-type belt gauntlet 1 comprising longitudinal tubes 13.

The longitudinal tubes 13 may have section of various shapes. Said section can be, for example, round, elliptic, oval, polygonal, such as square, rectangle, pentagonal, hexagonal, octagonal, or any other shapes that can be suitable for a longitudinal tubes of a protection for an electrode plate. In the example shown here, the longitudinal tubes are of circular shape.

To form the gauntlet, the two faces 9a, 9b are joined together by separation lines 15 parallel to each other. Said separation lines 15 form the longitudinal tubes 13 of the gauntlet 1. Consequently, a separation line 15 is present between each of the longitudinal tubes 13. Preferably, said separation lines 15 are sewing lines.

The separation lines 15 can also be obtained by gluing, welding, (such as ultrasonic welding or thermo welding) and/or any equivalent joining methods.

Advantageously, said two faces 9a, 9b of the cartridge-type belt gauntlet 1 are made of a single sheet 17 of fabric. Here, the single sheet comprises two lateral edges 19a, 19b that are superimposed and joined by a connection line 21 to form the gauntlet 1. Preferably, the connection line 21 is a sewing line. The connection line 21 can also be obtained by gluing, welding, (such as ultrasonic welding or thermo welding) and/or any equivalent joining methods.

It is also conceivable that the two edges 19a, 19b of the single sheet 17 are abutted (not shown). Each of the edges 19a, 19b are joined, for example to the other face of the protection, by a connection line 21 to form the gauntlet 1. Thus, two connection lines are side by side.

As can be seen on the different figures, a protection 1, here a cartridge-type belt gauntlet, wherein the lateral sides 11 a, 11b are ribless is thus obtained. The first and last tubes can then be of a regular shape without any lateral deformation.

Moreover such protection reduces the amount of separation lines, especially reduces the amount of sewing yarns, glue and/or welding used.

In the embodiment shown here, the gauntlet 1 comprise 19 longitudinal tubes 13. The connection line 21 is located between the sixth and the seventh tube starting from the left, i.e. the connection line 21 is located on the first half of the width of the protection 1.

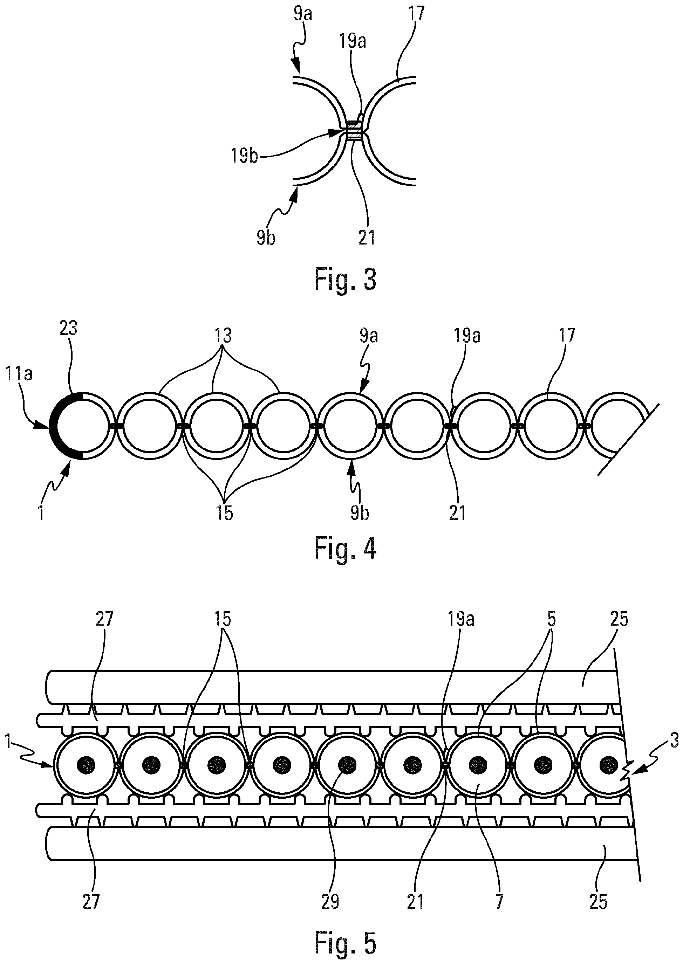

It should also be noted that advantageously, the connection line 21 and one of said separation lines 15 can be merged, as represented here in figure 3.

Thus, at the connection line 21, a stack of three layers of fabric is present. The connection line 21 is placed so as a minimal of fabric exceeds and remains free but so as the connection is strong enough to withstand possible tensions. The connection line can be done so as no fabric remains free.

Advantageously, the minimal of fabric exceeding and remaining can be glued or welded to avoid letting it free.

In a second embodiment shown in figure 4, said protection 1 comprises an insulation material 23 along said lateral sides 11 a, 11 b. The insulation material 23 can be glue or hotmelt. Here, half of the last tube on each side of the gauntlet 1 is coated with said insulation material 23.

The protection 1 can be made of a non-woven, woven, and/or knitted fabric or any other material having the required properties. Preferably the fabric can be made of polyester, polypropylene or a mixture thereof.

The fabric can be impregnated by a protective resin aiming at creating a protective film enhancing the resistance of said fabric against oxidation and acid environment. Said protective resin can be an aqueous or solvent dispersion of a thermoplastic or thermoset polymer or copolymer.

The protective resin can also be made of latex. It can be a fabric using core-shell latex, multiphase latex or latex in stable dispersion.

The quantity of protective resin applied is in the range of 5 to 40 % weight, preferably 13 to 30 % weight. The sheet is dried in an oven down to a moisture content less than 1 % weight while avoiding shrinkage. The sheet is wound on rolls.

Said protective resin is chosen, for instance, among the group consisting of: acrylic resins like e.g. methyl methacrylate resins or butyl acrylate/methyl acrylate copolymer resins, styrene-butadiene resins, phenolic resins or mixtures thereof.

When a thermoplastic resin is used, said protective film can be obtained by coating, especially by liquid or by powder coating.

The fabric and the protective film can be a cross-linked system as a three dimensional network.

Said two faces 9a, 9b show a permeability distinguishing them from the separator. As an example, their greater pore size is over 50 µm, more precisely over 10 µm.

In a first embodiment, the sheet of fabric is made of a non-woven sheet. Nonwoven manufacture starts by the arrangement of fibres in a sheet or web. The fibres can be staple fibres packed in bales, or filaments extruded from molten polymer granules. Four basic methods are used to form a web, and non-wovens are usually referred to by one of these methods: drylaid, wetlaid, or spunmelt. The web must be consolidated in some way. This is effected by bonding. There are three basic types of bonding: chemical, thermal and mechanical.

Such non-woven fabrics are sold e.g. by Freudenberg under the trade name Terbond™, by JohnsManville under the trade name Duraspun™, by ORV under trade mark Dewtech™ or under the name Mopet by Mogul.

As already mentioned, the non-woven fabric can be impregnated with said protective resin. The fabric can be impregnated thereof between the bonding step and a winding step, and/or the impregnation can be made of line.

In another embodiment said sheet of fabric is a woven sheet. According to a preferred embodiment the woven sheet is made of polyester yarn, polypropylene yarn or a polyester/polypropylene mixture yarn.

The yarns for warp and weft have different properties; the most important difference that the yarn for the weft is a thermoshrinkable yarn from for example Diolen sold under the reference HT57Z130. The yarn for the weft is, for instance, perpendicular to said lateral sides.

For the warp direction, the yarn can consist of polyester or polypropylene or mixtures thereof in the range of 250 - 700 dtex, preferably of polyester of 400 - 550 dtex. This yarn is sold for example by Yamatex under the reference NE 24/2.

The difference in yarns allows the pocket to shrink in the transverse direction to maintain the active mass while in longitudinal direction the shrinkage is minimal. This is obtained by the thermoshrinkability of the above-mentioned yarn from Diolen.

For the weft direction, the thermoshrinkable yarn consists of polyester or polypropylene or mixtures thereof in the range of 300 - 800 dtex, preferably of polyester of 500 - 600 dtex.

For the warp direction, the number of yarns should be in the range of 140 - 225 per 100 mm, preferably between 165 - 205 per 100 mm. On both outmosts of the pocket, the number of yarns should be increased to 250 - 500, preferably from 350 - 410 per 100 mm and this on a width of 5 - 30 mm, preferably from 7 - 20 mm in case of one single pocket is woven in width. For the weft direction, the number of yarns should be in the range of 80 - 230 per 100 mm, preferably between 130 - 180 per 100 mm.

The sheet coming out of the weaving machine is preferably impregnated with the protective resin either on line or off line in a subsequent process step.

As mentioned above, the protection 1 is preferably used to protect a positive electrode plate 3 in a lead acid battery.

As illustrated in figure 5, the plat electrode can be a positive electrode plate 3 comprising tubular electrodes 5 and active mass 7 surrounding said electrodes 5. Said active mass 7 is contained in and by said longitudinal tubes 13.

Said lead acid battery is composed for instance of negative electrode plates 25 and positive electrode plates 3 with said protection 1. In figure 5, the negative electrode plates 25 are flat and the positive electrode plates 3 comprise several tubular electrodes and the gauntlet protection 1. They are alternately placed in the battery.

In addition, to limit the short circuit between the negative and the positive electrodes 25, 3, the battery further comprises separators 27. They are placed between said negative and positive electrode plates 25, 3.

They can be formed of leaf type separators intercalated between the electrode plates or they can be formed of sleeve or pocket type separators in which the electrode plates are introduced. In figure 5, leaf type separators are used.

Thus, figure 5 shows, from top to bottom, a first flat negative electrode plate 25, a first leaf type separator 27, a tubular positive electrode plate 3 with gauntlet protection 1, a second leaf type separator 27 and a second flat negative electrode plate 25.

In another embodiment (not shown), the leaf type separators are replaced by sleeve or pocket type separators in which the positive electrode plate is located.

The absence of rib on the lateral side 11 a, 11 b of the protection 1 allows to use more easily sleeve or pocket type separators 27 placed around the positive electrode plates 3 which is advantageous given that the number of negative electrode plates 3 in a battery is generally higher than the number of positive electrode plates 27. Placing easily sleeve or pocket type separator 27 around the positive electrode plates 3 involves using less material and a cost decrease.

Here, as already said, the gauntlet 1 is obtained from a single sheet 17 of fabric instead of two sheets. The single sheet 17 is folded so as to superimpose and join its two lateral edges 19a, 19b. Then a series of parallel separation lines 15 regularly spaced are made by sewing so as to form the longitudinal tubes 13. The distance between two separation lines 15 is chosen with respect to the electrodes diameter and the desired quantity of active mass 7 to encase. Advantageously, one of the separation line 15 can be also the connection line 24 that join the two lateral edges 19a, 19b of the sheet 17.

This process allows to limit the number of connection lines 21, especially the two classical connection lines on the lateral sides 11 a, 11 b are avoided. Moreover, the connection line 21 being advantageously also a separation line 15, this process does not add supplementary lines.

Afterwards, the gauntlet 1 can be thermo-formed to give the desired shape and rigidity to the longitudinal tubes.

Finally, pencils 29 made of current carrying spines are introduced in the longitudinal tubes 13 and surrounded by the active mass 7 to form the tubular electrodes 5 of the positive electrode plate 3.

## Claims

1. Protection (1) for an electrode plate of a lead acid battery, said protection (1) comprising at least one sheet of fabric defining two faces (9a, 9b), an upper side (10a), an opposed lower side (10b) and two lateral sides (11 a, 11 b) extending between said upper and lower sides (10a, 10b), said lateral sides (11 a, 11 b) being ribless.

2. Protection (1) according to claim 1, wherein said two faces (9a, 9b) are made of an single sheet (17) of fabric.

3. Protection (1) according to claim 2, wherein said single sheet (17) comprises two lateral edges (19a, 19b), said lateral edges (19a, 19b) being joined by at least one connection line (21).

4. Protection (1) according to claim 3, wherein said two lateral edges (19a, 19b) are superimposed.

5. Protection (1) according to claims 3 or 4, wherein a width of said protection (1) is defined between said lateral sides and said connection line (21) is located between the first and the last eighth of the length of the protection (1).

6. Protection (1) according to any of claims 5, wherein said protection (1) is a cartridge-type belt gauntlet comprising longitudinal tubes (13).

7. Protection (1) according to claim 6, wherein said cartridge-type belt gauntlet comprises separation lines (15) parallel to each other, said separation lines (15) joining said two faces (9a, 9b) and forming said longitudinal tubes (13).

8. Protection (1) according to claim 7, wherein said connection line (21) and one of said separation lines (15) are merged.

9. Protection (1) according to claims 7 or 8, wherein said connection line (21) and/or separation lines (15) is/are sewing lines.

10. Protection (1) according to any of claims 1 to 9, wherein said protection (1) comprises an insulation material (23) along said lateral sides (11 a, 11 b).

11. Protection (1) according to any of claims 1 to 10, wherein said fabric material being a non-woven, woven and/or knitted fabric.

12. Positive electrode plate (3) comprising a protection (1) according to any of the preceding claims.

13. Positive electrode plate (3) according to claim 12 comprising tubular electrodes (5) and active mass (7) surrounding said electrodes, said active mass (7) being contained in and by said protection (1).

14. Lead acid battery comprising positive electrode plates (3) according to claims 12 or 13.

15. Lead acid battery according to claim 14 comprising further negative electrode plates (25) and separators (27) placed between said negative and positive electrode plates (25, 3).
